# EUROPÄISCHE PATENTSCHRIFT

(11) **EP 3 670 405 B1**
(45) Veröffentlichungstag und Bekanntmachung des Hinweises auf die Patenterteilung: **20.12.2023**
(21) Anmeldenummer: 19213182.9
(22) Anmeldetag: 03.12.2019
(51) Int. Cl.: B65G 57/06, B65G 57/24

(54) **VERFAHREN ZUM UMGANG MIT ARTIKELGRUPPEN UND/ODER ARTIKELLAGEN**
METHOD FOR HANDLING ARTICLE GROUPS AND / OR ARTICLE LAYERS
PROCÉDÉ DE MANIPULATION DE GROUPES D'ARTICLES ET/OU D'EMPLACEMENTS D'ARTICLES

(30) Priorität: 20.12.2018 DE 102018133071
(43) Veröffentlichungstag der Anmeldung: 24.06.2020
(73) Patentinhaber: KRONES Aktiengesellschaft, 93073 Neutraubling (DE)
(72) Erfinder: BEER, Erhard, 93073 Neutraubling (DE); KOLLMUSS, Manuel, 93073 Neutraubling (DE); OSTERHAMMER, Martin, 93073 Neutraubling (DE)
(74) Vertreter: Benninger, Johannes

(56) Entgegenhaltungen:
- EP-A1- 2 848 561
- EP-A2- 3 424 851
- WO-A1-2014/135950
- KR-A- 20180 057 430
- US-A1- 2013 160 403

## Beschreibung

Die vorliegende Erfindung betrifft ein Verfahren zum Umgang mit Artikelgruppen und/oder Artikellagen.

Zur Palettierung von gesamten Artikellagen durchlaufen die Artikel normalerweise zunächst eine Gruppierstation, in der die transportierten Artikel zu palettierfähigen Lagen zusammengestellt werden. Diese palettierfähigen Lagen werden dann von einer Bereitstellungsstation an eine Beladestation überführt. Die Beladestation legt diese Artikellagen dann an einem gewünschten Ort ab. Dieser Ort wird meist durch einen Stapelplatz und eine darauf befindliche Palette gebildet, auf der die Artikellagen abgelegt werden können. Die Bereitstellungsstation und die Gruppierstation stellen meist eine Einheit dar und sind unmittelbar miteinander gekoppelt. Die Bereitstellungstation umfasst ebenso wie die Gruppierstation eine Auflagefläche oder Auflageebene, auf der die Artikel gruppiert und zu einer Lage zusammengestellt werden. Die Beladestation umfasst ebenso eine Auflageebene, welche in aus dem Stand der Technik bekannter Weise einteilig oder auch zwei- oder mehrteilig ausgeführt sein kann.

Bei einer bspw. zweiteilig ausgebildeten Auflagefläche der Beladestation besteht die Auflagefläche aus zwei Tragböden oder sog. Beladeplatten, welche im Beladezustand geschlossen und anschließend während der Abgabe- oder Ablegephase zum Ablegen der Artikellage auf einem Stapelplatz oder einer Palette geöffnet werden. Dem Fachmann sind hier zahlreiche Varianten bekannt wie z.B. Jalousiegreiferköpfe oder ähnliches. Dabei verläuft ein solches Palettierverfahren mit einer aus dem Stand der Technik bekannten Palettiervorrichtung in einer Weise, dass zunächst Artikel mittels einer Gruppiereinrichtung zu einer palettierfähigen Lage zusammengestellt werden und im Anschluss daran von einem Bereitstellungsplatz bzw. einer Bereitstellungsstation in die Beladestation übergeben werden.

Hierzu ist es notwendig, dass die Beladestation, wie z.B. ein an einem Hubwerk oder auch Roboter angeordneter Jalousiegreiferkopf, sich an den Bereitstellungsplatz anschließt damit die Überführung der Artikellage in die Beladestation erfolgen kann. Dabei verweilt der Jalousiegreiferkopf bzw. die Beladestation so lange an Ort und Stelle, bis die Lage vollständig von der Bereitstellungsstation in die Beladestation übergeben wurde. Befindet sich die Artikellage vollständig in der Beladestation, so positioniert die Beladestation durch horizontale und vertikale Bewegungen die Artikellage an einem gewünschten Abgabeort, meist auf einer auf einem Stapelplatz bereitgestellten Palette. Im Anschluss daran erfolgt die gleiche Prozedur erneut so lange, bis die gewünschte Anzahl an Lagen auf der Palette abgelegt wurde.

So offenbart die DE 10 2008 015 278 A1 eine Vorrichtung zum Beladen von Paletten mit Stückgütern mit einer Stückgutbereitstellungsstation und einer Übersetzvorrichtung zum Übersetzen der Gruppe von Stückgütern von der Stückgutbereitstellungsstation auf eine an einem Stapelplatz bereitgehaltene Palette und/oder eine bereits darauf befindliche übergesetzte Stückgutschicht. Zur Verbesserung einer Palettierleistung schlägt diese Vorrichtung vor, die Übersetzvorrichtung als geteilte Unterstützungsebenen auszugestalten. Dabei ist vorgesehen, dass zumindest ein Teil der Unterstützungsebenen so groß gewählt ist, dass eine vollständige Lage von der Stückgutbereitstellungsstation aufgenommen werden kann. Die Unterstützungsebenen werden somit beim Beladen derselben auseinandergefahren und an gegenüber liegenden Seiten des Stapelplatzes bereitgehalten. Dabei werden die Unterstützungsebenen zum Beladen auf ein Niveau angehoben oder abgesenkt, welches dem Höhenniveau der Stückgutbereitstellungstation entspricht. Sobald das gleiche Höhenniveau erreicht ist, wird die nächste Artikellage auf die Unterstützungsebene übergeschoben. Im Anschluss daran werden die Unterstützungsebenen auf das jeweilige nächste Lagenniveau zum Ablegen der Lage angehoben oder abgesenkt, wobei gleichzeitig die Unterstützungsebenen zusammengefahren werden und die Stückgutlage mittig auf die Unterstützungsebenen verschoben werden. Zum Ablegen werden die Unterstützungsebenen dann wiederum auseinandergefahren. Die genannte Vorrichtung hat auf Grund der zweiteiligen Unterstützungsebenen somit den Vorteil, dass während beispielsweise eines Vollpalettenauslaufs die Übersetzvorrichtung sich bereits wieder auf das Niveau der Stückgutbereitstellungsstation bewegen bzw. absenken oder anheben kann.

Die WO 2014/135950 A1, welche die Merkmale des Oberbegriffs des Anspruchs 1 offenbart, offenbart eine Palettiervorrichtung, welche Lagen an Artikeln auf einer Palette absetzen kann. Bestandteil der Vorrichtung ist eine Jalousie, welche geöffnet werden kann, um eine jeweilige Lage an Artikeln auf der Palette abzusetzen. Zudem ist eine Speicherplattform vorgesehen, auf welcher eine vollständige Lage an Artikeln vor Überführung an die Jalousie angeordnet werden kann. Um eine Lage an Artikeln zu bewegen, verfügt die Speicherplattform über einen Gurtbandförderer.

Die KR 2018 0057 430 A offenbart weiterhin eine Beladeeinrichtung zum Überführen von Artikeln auf eine Palette. Die Beladeeinrichtung umfasst ein Lademodul sowie zwei jeweils in vertikaler Richtung auf und ab bewegbare Transfermodule, die zum Überführen von Artikeln auf eine Palette zusammenwirken.

Weiterhin zeigt die EP 2 848 561 A1 Verfahren und Vorrichtung zur horizontalen Verschiebung Artikelgruppen oder Artikellagen von einer ersten Auflageebene eines ersten Moduls auf eine zweite Auflageebene eines zweiten Moduls vor oder während einer vertikalen Hubbewegung, wobei die zweite Auflageebene des zweiten Moduls horizontalbeweglich ausgebildet ist, sich zur Übernahme der Artikelgruppe oder -lage der ersten Auflageebene des ersten Moduls diesem annähert und nach der Übernahme die Artikelgruppe oder -lage diese auf dem zweiten Modul zentriert.

Eine weitere Ausgestaltung einer Vorrichtung zum Überschieben von Artikeln zeigt die EP 3 424 851 A2, bei welcher an einem in Förderrichtung befindlichen Ende einer Auflagefläche eine schwenkbare Begrenzungs- und/oder Anschlagleiste angeordnet ist. Die Begrenzungs- und/oder Anschlagleiste dient in einer ersten, nach oben geschwenkten Endlage als Anlageleiste für eine auf der Auflagefläche stehende Artikellage und stellt in einer zweiten, zur Auflagefläche parallelen Anordnung einen Horizontalförderabschnitt für die zu überschiebende Artikellage dar.

Die EP 1 321 396 A1 offenbart zudem eine Palettiervorrichtung, bei der Artikel in ungeordneter Weise von einer Horizontalfördereinrichtung in seitlicher Richtung verschoben und dabei gruppiert werden, bevor sie in kompletten Lagen auf eine Hubeinrichtung überführt werden. Die Hubeinrichtung bzw. Transferplattform dient dabei als Höhenausgleich zwischen der Gruppierstation und der Beladestation, welche die Lagen übereinander stapelt und mittels eines zu öffnenden Rollbodens auf einer Palette ablegt. Das Dokument offenbart weiterhin, dass die Transferplattform nicht in einer einzigen Bewegungsphase eine Anzahl an Reihen von Artikeln aufnehmen und überführen kann, welche zur Bildung einer vollständigen Artikellage notwendig ist. Der Vorteil wird dabei darin gesehen, dass bedingt durch die kleinere Bauart der Transferplattform und das nicht vollständige Anheben einer gesamten Artikellage weniger Gewicht angehoben werden muss und somit weniger Energieverbrauch stattfindet als bei dem Anheben der Beladestation an sich.

Aus dem Stand der Technik sind somit verschiedene Varianten bekannt, die in Lagen zusammengestellte Artikel auf einer Palette stapeln können. Den aus dem Stand der Technik bekannten Vorrichtungen und Verfahren ist jedoch der Nachteil gemeinsam, dass zum Überführen einer Artikellage von einer Bereitstellungsstation oder einer Transferplattform in eine Beladestation bzw. auf eine Beladestation die Auflageflächen derselben ortsfest sein müssen und sich während des Überführens der Artikellage nicht oder nur gemeinsam in vertikaler Richtung bewegen dürfen.

Dies ist auch aus dem Grunde erforderlich, da jeweilige Artikellagen über Schubbalken von einer Bereitstellungsstation oder einer Transferplattform auf die jeweilige Beladestation geschoben werden und sich hierdurch bei einer vorzeitigen vertikalen Bewegung eine Kollision einer der Stationen mit einem Schubbalken ergeben würde. Hiermit ist ein in der Praxis unerwünschter Zeitverlust einhergehend. Auch wird wirkt sich dies negativ auf einen Durchsatz eines mit dem Verbringen von Artikellagen in Zusammenhang stehenden Palettierungsprozesses aus.

Eine Aufgabe kann somit darin gesehen werden, ein gattungsgemäßes Verfahren bereitzustellen, das sich durch einen hohen Durchsatz auszeichnen.

Weiter soll das Verfahren einfach umgesetzt werden können.

Die Aufgabe der Erfindung wird mit den Gegenständen gelöst, welche die Merkmale in dem unabhängigen Anspruch umfassen. Ausführungsformen werden durch die abhängigen Ansprüche beschrieben.

Die Erfindung betrifft ein Verfahren zum Verbringen einer Artikelgruppe und/oder Artikellage von einer ersten Auflageebene eines ersten Moduls auf eine zweite Auflageebene eines zweiten Moduls, welches zweite Modul dem ersten Modul in einer Förderrichtung der Artikelgruppe und/oder Artikellage nachgeordnet ist.

Das erste Modul kann beispielsweise durch ein Gruppiermodul ausgebildet sein, auf welchem Artikellagen und/oder Artikelgruppen bereitgestellt werden. Ein solches Gruppiermodul kann im Hinblick auf seine vertikale Position ortsfest ausgebildet bzw. in vertikaler Richtung selbst nicht heb- und senkbar sein.

Auch kann das erste Modul beispielsweise durch ein Transfermodul ausgebildet sein, welches eine jeweilige Artikellage und/oder Artikelgruppe von einem Gruppiermodul entgegennimmt und hierauf folgend an das zweite Modul bzw. ggf. an ein Belademodul übergibt. Das Transfermodul kann selbst in vertikaler Richtung heb- und senkbar sein. Somit kann das Transfermodul in vertikaler Richtung zu dem Gruppiermodul verfahren werden, um von dort eine jeweilige Artikellage und/oder Artikelgruppe entgegenzunehmen. Weiter kann das Transfermodul zeitlich nach Entgegennahme einer jeweiligen Artikellage und/oder Artikelgruppe vom Gruppiermodul in vertikaler Richtung zur Übergabe der weiterhin entgegengenommenen Artikellage und/oder Artikelgruppe an das Belademodul verfahren werden. Auch das Belademodul kann ggf. selbst in vertikaler Richtung bewegt werden. Bewährt haben sich Ausführungsformen, bei welchen das Transfermodul und das Belademodul zeitlich überlagert jeweils in vertikaler Richtung zueinander bewegt werden, um hierdurch eine gemeinsame Übergabeposition bzw. Übergabelage einzunehmen, in welcher eine jeweilige durch das Transfermodul aufgenommene Artikelgruppe und/oder Artikellage vom Transfermodul an das Gruppiermodul übergeben werden kann.

Das erste Modul und das zweite Modul werden im Rahmen des erfindungsgemäßen Verfahrens für ein zeitlich hierauf folgendes Überführen bzw. Übergeben einer Artikelgruppe und/oder Artikellage von der ersten Auflageebene auf die zweite Auflageebene in vertikaler Richtung relativ zueinander bewegt. Wie vorhergehend erwähnt, kann es hierbei sein, dass sowohl das erste Modul als auch das zweite Modul hierzu jeweils in vertikaler Richtung bewegt werden. Auch kann es sein, dass lediglich das zweite Modul in vertikaler Richtung bewegt wird, wobei das erste Modul in seiner vertikalen Lage verbleibt.

Weiter ist wenigstens eine der ersten Auflageebene des ersten Moduls sowie der zweiten Auflageebene des zweiten Moduls in Förderrichtung zwischengeordnete Horizontalfördereinrichtung vorgesehen, welche wenigstens eine Horizontalfördereinrichtung Artikel einer jeweiligen Artikelgruppe und/oder Artikellage zum Überführen von der ersten Auflageebene des ersten Moduls an die zweite Auflageebene des zweiten Moduls in Richtung der zweiten Auflageebene transportiert.

Die erste Auflageebene und die zweite Auflageebene können zwischen sich einen Verbringungsweg ausbilden, entlang welchen Verbringungsweges eine jeweilige Artikelgruppe und/oder Artikellage zum Überführen von der ersten Auflageebene an die zweite Auflageebene transportiert werden muss. Die wenigstens eine Horizontalfördereinrichtung kann eine jeweilige Artikelgruppe und/oder Artikellage unmittelbar vom ersten Modul bzw. von der ersten Auflageebene entgegengennehmen, entlang des gesamten Verbringungsweges transportieren und hierauf folgend unmittelbar an das zweite Modul bzw. an die zweite Auflageebene übergeben.

Es kann sein, dass die der ersten Auflageebene und der zweiten Auflageebene in Förderrichtung zwischengeordnete Horizontalfördereinrichtung mechanisch fest mit dem zweiten Modul in Verbindung steht, wobei die der ersten Auflageebene und der zweiten Auflageebene in Förderrichtung zwischengeordnete Horizontalfördereinrichtung bei einer vertikalen Bewegung des zweiten Modul über die mechanische Verbindung mit dem zweiten Modul in vertikaler Richtung mitbewegt wird. Die wenigstens eine Horizontalfördereinrichtung kann zum Transport einer jeweiligen Artikelgruppe und/oder Artikellage eine Transportebene bereitstellen. Die zweite Auflageebene des zweiten Moduls und die Transportebene können eine gemeinsame ebene ausbilden bzw. durchgehend auf zumindest näherungsweise identischem vertikalem Niveau oder Höhenniveau befinden.

Weiter ist denkbar, dass sich Artikel einer jeweiligen Artikelgruppe und/oder Artikellage zeitlich während einer bestimmten Phase des Verbringens von der ersten Auflageebene auf die zweite Auflageebene zumindest anteilig noch auf der wenigstens einen Horizontalfördereinrichtung befinden, wobei das erste Modul während dieser bestimmten Phase in vertikaler Richtung und relativ zu der wenigstens einen Horizontalfördereinrichtung bewegt wird. Solche Ausführungsformen zeichnen sich durch einen hohen Durchsatz aus. Beispielsweise kann das erste Modul hierbei in Richtung eines eine weitere Artikellage und/oder Artikelgruppe bereitstellenden Gruppiermoduls vertikal angehoben oder vertikal abgesenkt werden. Das erste Modul kann gemäß der vorherigen Beschreibung als Transfermodul ausgebildet sein.

Die erste Auflageebene und eine durch die wenigstens eine Horizontalfördereinrichtung ausgebildete Transportebene können eine gemeinsame Ebene ausbilden und die gemeinsame Ebene beibehalten, bis wenigstens ein in Förderrichtung zuletzt angeordneter Artikel einer jeweiligen Artikelgruppe und/oder Artikellage von der ersten Auflageebene auf die wenigstens eine Horizontalfördereinrichtung vollständig übergetreten ist. Um die jeweilige gemeinsame Ebene auszubilden, können das erste Modul mit der ersten Auflageebene und die wenigstens eine Horizontalfördereinrichtung hierzu in vertikaler Richtung relativ zueinander bewegt werden bzw. die in vertikaler Richtung orientierte Relativbewegung ausführen. Gemäß der Erfindung ist eine Speicherkapazität der wenigstens einen Horizontalfördereinrichtung derart ausgebildet, dass die wenigstens eine Horizontalfördereinrichtung eine Artikellage und/oder Artikelgruppe lediglich anteilig aufnehmen kann. Solche Ausführungsformen zeichnen sich durch einen kompakten Aufbau bzw. durch einen geringen Platzbedarf aus.

Weiter kann es sein, dass zeitlich während und/oder zeitlich nach einem Übertritt einer jeweiligen Artikelgruppe und/oder Artikellage von der wenigstens einen Horizontalfördereinrichtung auf die zweite Auflageebene eine Anlagebalken mindestens einen jeweiligen in Förderrichtung zuvorderst angeordneten Artikel einer jeweiligen Artikellage und/oder Artikelgruppe mit geringem Abstand oder unter Oberflächenkontakt begleitet. Bewährt hat es sich hierbei, wenn der Anlagebalken unmittelbar bei Übertritt des mindestens einen in Förderrichtung zuvorderst angeordneten Artikel einer jeweiligen Artikellage und/oder Artikelgruppe auf die zweite Auflageebene eine Position einnimmt, bei welcher der Anlagebalken mit dem zuvorderst angeordneten Artikel in Oberflächenkontakt steht oder einen geringen Abstand zu dem zuvorderst angeordneten Artikel einer jeweiligen Artikellage und/oder Artikelgruppe ausbildet.

Erfindungsgemäß tritt mindestens ein vorzugsweise umlaufend geführter und dem ersten Modul zugeordneter Schubbalken mit wenigstens einem in Förderrichtung zuletzt angeordneten Artikel einer jeweiligen Artikelgruppe und/oder Artikellage in Oberflächenkontakt und schiebt den jeweiligen wenigstens einen in Förderrichtung zuletzt angeordneten Artikel einer jeweiligen Artikelgruppe und/oder Artikellage von der ersten Auflageebene des ersten Moduls auf die wenigstens eine Horizontalfördereinrichtung.

Der mindestens eine vorzugsweise umlaufend geführte und dem ersten Modul zugeordnete Schubbalken ragt während des Schiebens des wenigstens einen in Förderrichtung zuletzt angeordneten Artikels einer jeweiligen Artikelgruppe und/oder Artikellage von der ersten Auflageebene des ersten Moduls auf die wenigstens eine Horizontalfördereinrichtung zu keinem Zeitpunkt in horizontaler Richtung über die erste Auflageebene bzw. über das erste Modul hinaus.

Weiter kann mindestens ein vorzugsweise umlaufend geführter und dem zweiten Modul zugeordneter Schubbalken wenigstens einen auf die zweite Auflageebene des zweiten Moduls übergetretenen und in Förderrichtung zuletzt angeordneten Artikel einer jeweiligen Artikelgruppe und/oder Artikellage in eine durch die zweite Auflageebene ausgebildete Entladeposition schieben. Die umlaufende Führung des mindestens einen dem zweiten Moduls zugeordneten Schubbalkens kann derart ausgebildet sein, dass der umlaufend geführte und dem zweiten Modul zugeordnete Schubbalken zu keinem Zeitpunkt in horizontaler Richtung über die zweite Auflageebene des zweiten Moduls hinausragt bzw. dass der umlaufend geführte und dem zweiten Modul zugeordnete Schubbalken zu keinem Zeitpunkt die wenigstens eine Horizontalfördereinrichtung erreicht.

In diversen Ausführungsformen kann es sein, dass die wenigstens eine Horizontalfördereinrichtung mindestens ein drehend, rotierend und/oder umlaufend angetriebenes Fördermittel umfasst, auf welchem Artikel einer jeweiligen Artikelgruppe und/oder Artikellage aufstehen und über welches Artikel einer jeweiligen Artikelgruppe und/oder Artikellage in Richtung der zweiten Auflageebene transportiert werden. Beispielsweise kann das mindestens eine drehend, rotierend und/oder umlaufend angetriebene Fördermittel durch mindestens eine Fördermatte ausgebildet sein, auf welcher Artikel einer jeweiligen Artikelgruppe und/oder Artikellage aufstehen. Alternativ oder ergänzend hierzu kann das mindestens eine drehend, rotierend und/oder umlaufend angetriebene Fördermittel durch mehrere Förderkugeln oder mehrere Förderrollen ausgebildet sein, auf welchen Artikel einer jeweiligen Artikelgruppe und/oder Artikellage aufstehen.

Weiterhin ist eine für das erfindungsgemäße Verfahren geeignete Vorrichtung zum Umgang mit einer Artikelgruppe und/oder Artikellage beschrieben. Merkmale, welche vorhergehend bereits zu diversen Ausführungsformen des Verfahrens beschrieben wurden, können ebenso bei diversen Ausführungsformen der nachfolgend beschriebenen Vorrichtung vorgesehen sein und werden nicht mehrfach erwähnt. Weiter können nachfolgend beschriebene Merkmale, welche diverse Ausführungsformen der Vorrichtung betreffen, ggf. bei diversen Ausführungsformen des vorhergehend bereits beschriebenen Verfahrens vorgesehen sein.

Die Vorrichtung umfasst ein erstes Modul mit einer ersten Auflageebene für eine jeweilige Artikelgruppe und/oder Artikellage sowie ein zweites Modul mit einer zweiten Auflageebene für eine Artikelgruppe und/oder Artikellage, wobei das erste Modul und das zweite Modul zum Überführen einer jeweiligen Artikelgruppe und/oder Artikellage von der ersten Auflageebene auf die zweite Auflageebene in vertikaler Richtung relativ zueinander bewegbar sind. Bewährt haben sich Ausführungsformen, bei welchen das erste Modul und das zweite Modul zum Überführen einer jeweiligen Artikelgruppe und/oder Artikellage von der ersten Auflageebene auf die zweite Auflageebene jeweils in vertikaler Richtung bewegbar ausgebildet sind. Es kann eine Steuer- und/oder Regeleinrichtung vorgesehen sein, welche die jeweilige vertikale Bewegung für das erste Modul und das zweite Modul aufeinander abgestimmt vorgibt bzw. veranlasst. Das erste Modul kann weiterhin als Gruppiermodul oder als Transfermodul ausgebildet sein. Weiter kann das zweite Modul als Belademodul ausgebildet sein, welches ggf. eine auf die Auflageebene des zweiten Moduls überführte Artikelgruppe und/oder Artikellage auf einer Palette absetzen kann.

Weiter besitzt die Vorrichtung wenigstens eine der ersten Auflageebene des ersten Moduls sowie der zweiten Auflageebene des zweiten Moduls zwischengeordnete Horizontalfördereinrichtung welche wenigstens eine Horizontalfördereinrichtung Artikel einer jeweiligen Artikelgruppe und/oder Artikellage zum Überführen von der ersten Auflageebene des ersten Moduls an die zweite Auflageebene des zweiten Moduls in Richtung der zweiten Auflageebene transportieren kann. Die wenigstens eine Horizontalfördereinrichtung kann ggf. bei einer Überführung einer Artikelgruppe und/oder Artikellage von der ersten Auflageebene des ersten Moduls an die wenigstens eine Horizontalfördereinrichtung unter Ausbildung eines geringen Abstandes in Förderrichtung der Artikel unmittelbar an die erste Auflageebene anschließen.

Die wenigstens eine Horizontalfördereinrichtung kann mechanisch starr oder im Wesentlichen starr an das zweite Modul gekoppelt sein.

Auch kann die wenigstens eine Horizontalfördereinrichtung zum Transportieren von Artikeln einer jeweiligen Artikelgruppe und/oder Artikellage in Richtung der zweiten Auflageebene mindestens ein drehend, rotierend und/oder umlaufend angetriebenes Fördermittel umfassen, auf welchem Artikel einer jeweiligen Artikelgruppe und/oder Artikellage zum Transport in Richtung der zweiten Auflageebene aufstehen können.

Die Vorrichtung kann mindestens einen Anlagebalken umfassen, welcher zum Begleiten mindestens eines zuvorderst angeordneten Artikel einer jeweiligen Artikelgruppe und/oder Artikellage mit geringem Abstand oder unter Oberflächenkontakt zeitlich während oder nach einem Übertritt einer jeweiligen Artikelgruppe und/oder Artikellage von der wenigstens einen Horizontalfördereinrichtung auf die zweite Auflageebene ausgebildet ist. Eine Längserstreckung des mindestens einen Anlagebalkens kann lotrecht zur Förderrichtung der Artikel verlaufen.

Weiter umfasst die Vorrichtung mindestens einen vorzugsweise umlaufend geführten und dem ersten Modul zugeordneten Schubbalken, welcher mit wenigstens einem in Förderrichtung zuletzt angeordneten Artikel einer jeweiligen Artikelgruppe und/oder Artikellage in Oberflächenkontakt treten und den jeweiligen wenigstens einen in Förderrichtung zuletzt angeordneten Artikel einer jeweiligen Artikelgruppe und/oder Artikellage von der ersten Auflageebene auf die wenigstens eine Horizontalfördereinrichtung schieben kann. Der mindestens eine dem ersten Modul zugeordnete Schubbalken ist derart vorzugsweise umlaufend geführt, dass der mindestens eine dem ersten Modul zugeordnete Schubbalken zu keinem Zeitpunkt in horizontaler Richtung über die erste Auflageebene bzw. über das erste Moduls hinausragt.

Auch kann die Vorrichtung mindestens einen vorzugsweise umlaufend geführten und dem zweiten Modul zugeordneten Schubbalken umfassen, welcher wenigstens einen auf die zweite Auflageebene des zweiten Moduls übergetretenen und in Förderrichtung zuletzt angeordneten Artikel einer jeweiligen Artikelgruppe und/oder Artikellage in eine durch die zweite Auflageebene des zweiten Moduls ausgebildete Entladeposition schieben kann. Zeitlich nach Schieben des wenigstens einen auf die zweite Auflageebene des zweiten Moduls übergetretenen und in Förderrichtung zuletzt angeordneten Artikels einer jeweiligen Artikelgruppe und/oder Artikellage in die durch die zweite Auflageebene des zweiten Moduls ausgebildete Entladeposition kann das zweite Modul die jeweilige Artikellage und/oder Artikelgruppe auf einer zugeordneten Palette.

Die Vorrichtung kann zum Durchführen der Ausführungsformen des vorhergehend beschriebenen erfindungsgemäßen Verfahrens ausgebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1 bis 5 zeigen eine schematische Ansicht einer Ausführungsform einer für das erfindungsgemäße Verfahren geeigneten Vorrichtung und verdeutlichen einzelne Schritte, wie sie bei diversen Ausführungsformen des erfindungsgemäßen Verfahrens vorgesehen sein können.

Fig. 6 zeigt im Flussdiagramm einzelne Schritte, wie sie bei diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der Vorrichtung ein besseres Verständnis für den in den Ansprüchen sowie im allgemeinen Teil der Beschreibung allgemeiner und/oder abstrakter formulierten Erfindungsgedanken abzuleiten.

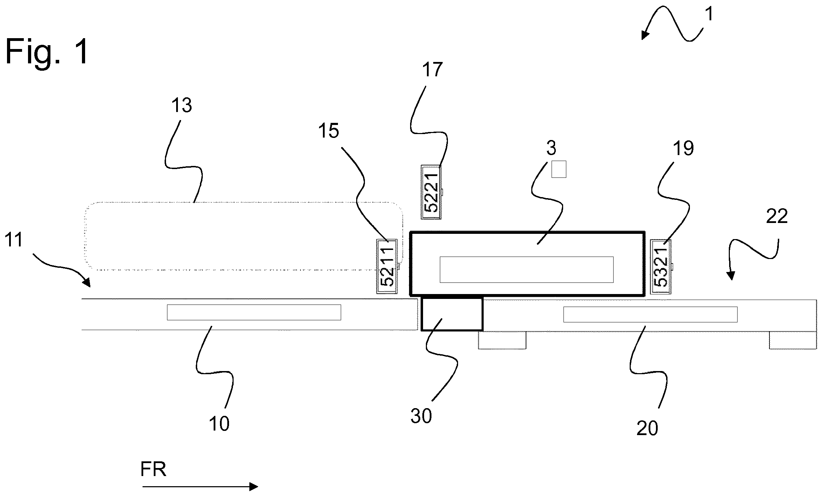

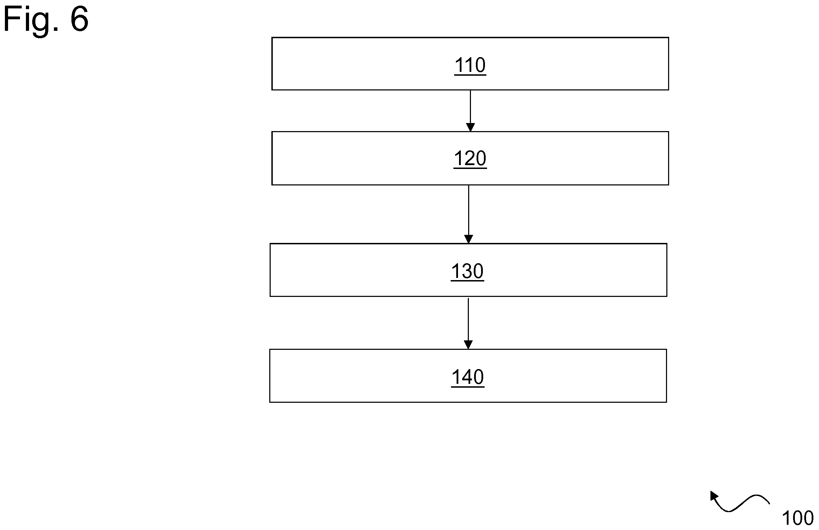

Die Figuren 1 bis 5 zeigen jeweils eine schematische Ansicht einer Ausführungsform einer Vorrichtung 1 und verdeutlichen einzelne Schritte, wie sie bei diversen Ausführungsformen des erfindungsgemäßen Verfahrens 100 (vgl. Fig. 6) vorgesehen sein können. Die Vorrichtung 1 ist zum Überführen einer Artikellage 3 auf eine Palette vorgesehen, welche in den Figuren der vorliegenden Patentanmeldung nicht mit dargestellt ist.

Hierzu umfasst die Vorrichtung 1 ein erstes Modul 10 mit einer ersten Auflageebene 11, über welche erste Auflageebene 11 das erste Modul 10 eine vollständige Artikellage 3 tragen kann. Das erste Modul 10 kann beispielsweise als Gruppiermodul ausgebildet sein, welches eine vollständige Artikellage 3 zur Überführung an eine jeweilige Palette bereitstellt und selbst im Hinblick auf seine vertikale Position nicht angehoben oder abgesenkt werden kann. In weiteren Ausführungsformen kann das erste Modul 10 als Transfermodul ausgebildet sein, welches eine vollständige Artikellage 3 entgegennimmt und hierauf folgend selbst zusammen mit der entgegengenommenen vollständigen Artikellage 3 in vertikaler Richtung verfahren wird, um anschließend die noch aufgenommene Artikellage 3 an das zweite Modul 20 zu übergeben.

Weiter sind ein dem ersten Modul 10 zugeordneter Schubbalken 15, ein dem zweiten Modul 20 zugeordneter Schubbalken 17 und ein Anlagebalken 19 vorgesehen, deren jeweilige Bewegung und Funktion mittels einer Zusammenschau der Figuren 1 bis 5 verdeutlicht und nachfolgend noch beschrieben wird.

Wie in Fig. 1 zu erkennen, ist der ersten Auflageebene 11 und der zweiten Auflageebene 22 in der für die Artikel bzw. die Artikellage 3 vorgesehenen Förderrichtung FR eine Horizontalfördereinrichtung 30 zwischengeordnet. Die Horizontalfördereinrichtung 30 kann Artikel einer jeweiligen Artikellage 3 zum Überführen von der ersten Auflageebene 11 an die zweite Auflageebene 22 in Richtung der zweiten Auflageebene 22 transportieren. Das Überführen von der Auflageebene 11 des ersten Moduls 10 an die Auflageebene 22 des zweiten Moduls 20 erfolgt somit mittelbar bzw. unter Zuhilfenahme der Horizontalfördereinrichtung 30. Im Ausführungsbeispiel der Figuren 1 bis 5 umfasst die Horizontalfördereinrichtung 30 hierzu ein umlaufend angetriebenes Transportband, auf welchem die jeweiligen Artikel einer jeweiligen Artikellage 3 während der Bewegung in Richtung der zweiten Auflageebene 22 temporär aufstehen.

In Fig. 1 hat die Artikellage 3 die erste Auflageebene 11 des ersten Moduls 10 nahezu vollständig verlassen, wobei sich die einzelnen Artikel der Artikellage 3 anteilig auf der Horizontalfördereinrichtung 30 befinden und anteilig bereits auf die zweite Auflageebene 22 des zweiten Moduls 20 übergetreten sind. Die Artikellage 3 hat somit noch nicht vollständig auf die zweite Auflageebene 22 gewechselt bzw. ist in Fig. 1 noch nicht vollständig an die zweite Auflageebene 22 des zweiten Moduls 20 übergeben. Damit die Artikel einer jeweiligen Artikellage 3 von der ersten Auflageebene 10 auf die Horizontalfördereinrichtung 30 gelangen, tritt ein dem ersten Modul 10 zugeordneter Schubbalken 15 rückseitig mit in Förderrichtung FR zuletzt angeordneten Artikeln einer jeweiligen Artikellage 3 in Oberflächenkontakt und schiebt die jeweilige Artikellage 3 auf die Horizontalfördereinrichtung 30. Der Schubbalken 15 ist über die Bewegungsbahn 13 umlaufend geführt.

Wie in Fig. 1 verdeutlicht wird, ist die Bewegungsbahn 13 derart ausgebildet, dass der Schubbalken 15 zu keinem Zeitpunkt in horizontaler Richtung über das erste Modul 10 bzw. über die erste Auflageebene 11 hinausragt. Unmittelbar nachdem der letzte Artikel einer Artikellage 3 auf die Horizontalfördereinrichtung 30 übergetreten ist, kann das erste Modul 10 hierdurch in vertikaler Richtung relativ zu der Horizontalfördereinrichtung 30 und relativ zu dem zweiten Modul 20 bewegt werden, ohne dass der dem ersten Modul 10 zugeordnete Schubbalken 15 hierbei ungewollt mit der Horizontalfördereinrichtung 30 oder dem zweiten Modul 20 kollidiert. Anstelle des Schubbalkens 15 kann das erste Modul 10 in einem weiteren Beispiel, welches nicht Teil der Erfindung ist, in weiteren Ausführungsformen eine weitere bzw. zusätzliche Horizontalfördereinrichtung ausbilden, welche die Artikel einer jeweiligen Artikellage 3 auf die in den Figuren 1 bis 5 jeweils auf Verweis mit Ziffer 30 dargestellte Horizontalfördereinrichtung übergeben kann.

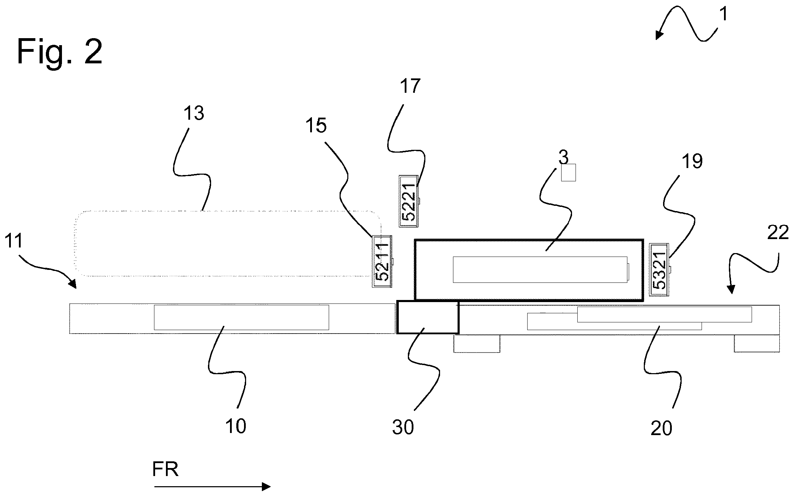

Eine Zusammenschau der Figuren 1 und 2 verdeutlicht zudem, dass der Schubbalken 15 fortlaufend entlang der Bewegungsbahn 13 verfahren wird, um zu einem späteren Zeitpunkt erneut eine Artikellage 3 auf die Horizontalfördereinrichtung 30 zu schieben. Die Artikellage 3 wurde in Fig. 2 weiter über die Horizontalfördereinrichtung 30 auf die zweite Auflageebene 22 des zweiten Moduls 20 in Förderrichtung FR geschoben. Ein Anlagebalken 19 eilt hierbei der Artikellage 3 in geringem Abstand voraus, wodurch verhindert werden kann, dass einzelne Artikel der Artikellage 3 während des Überführens und zeitlich nach dem Überführen auf die zweite Auflageebene 22 ungewollt kippen. In weiteren Ausführungsformen kann der Anlagebalken 19 mit den in Förderrichtung FR zuvorderst angeordneten Artikeln einer jeweiligen Artikellage 19 in Oberflächenkontakt stehen.

Auch hat die Artikellage 3 in Fig. 2 die Auflageebene 11 des ersten Moduls 10 vollständig verlassen. Sofern das erste Modul 10 als Transfermodul ausgebildet ist, kann das erste Modul 10 sodann in Richtung einer Bereitstellung bzw. eines Gruppiermoduls vertikal angehoben oder vertikal abgesenkt werden, um von dort eine weitere Artikellage entgegenzunehmen.

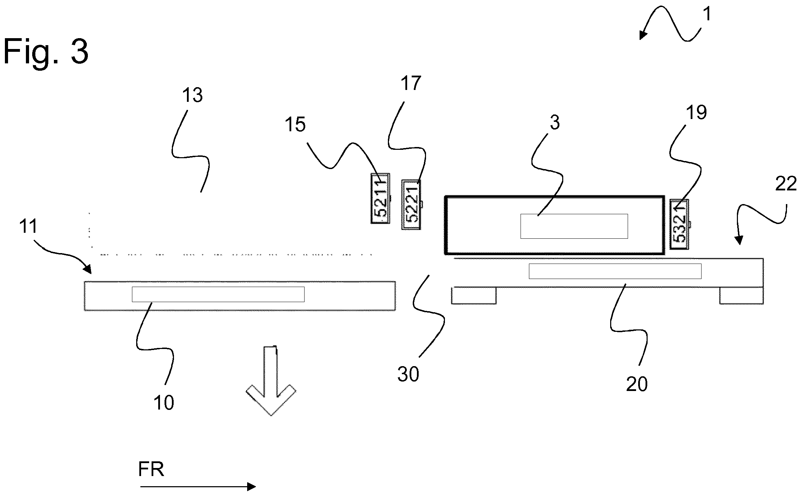

Eine solche beginnende vertikale Senkbewegung wird aus einer Zusammenschau der Figuren 2 und 3 verdeutlicht. Das erste Modul 10 bzw. das Transfermodul bewegt sich relativ zu dem zweitem Modul 20 bzw. dem Belademodul in vertikaler Richtung nach unten, um von einer nicht gezeigten Bereitstellung bzw. einem nicht gezeigten Gruppiermodul eine weitere Lage an Artikeln 3 entgegenzunehmen. Zudem verdeutlicht eine Zusammenschau der Figuren 2 und 3, dass die Artikellage 3 über die Horizontalfördereinrichtung 30 weiter auf die zweite Auflageebene 22 des zweiten Moduls 20 geschoben wird, während der Anlagebalken 19 weiter einem in Förderrichtung FR zuvorderst angeordneten Artikel der Artikellage 3 in geringem Abstand vorauseilt.

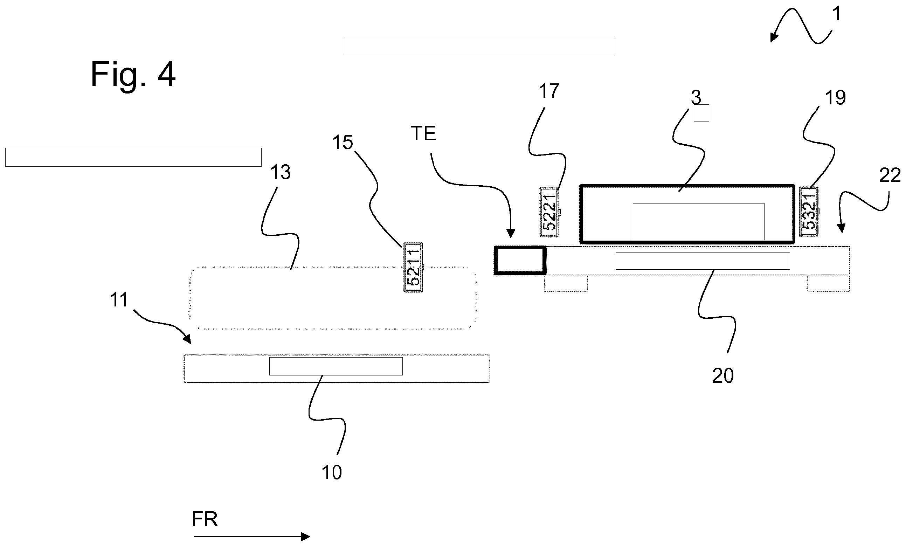

Aus seiner Position nach Fig. 3 wurde das erste Modul 10 in Fig. 4 weiter in vertikaler Richtung abgesenkt. Der Schubbalken 15, welcher dem ersten Modul 10 zugeordnet ist, wird hierbei zusammen mit dem ersten Modul 10 mitbewegt. In Fig. 4 befindet sich die Artikellage 3 nun vollständig auf der zweiten Auflageebene 22 bzw. hat die Horizontalfördereinrichtung 30 bereits verlassen. Ein umlaufender Antrieb des als Bestandteil der Horizontalfördereinrichtung 30 ausgebildeten Transportbandes kann in Fig. 4 temporär unterbrochen sein. Ein dem zweiten Modul 20 zugeordneter Schubbalken 17 ist in Fig. 4 in Förderrichtung FR hinter der bereits auf der zweiten Auflageebene 22 angeordneten Artikellage 3 positioniert.

Aus Fig. 4 wird zudem deutlich, dass die Horizontalfördereinrichtung 30 fest an das zweite Modul 20 gekoppelt ist. Eine durch die Horizontalfördereinrichtung 30 ausgebildete Transportebene TE und die zweite Auflageebene 22 des zweiten Moduls 20 bilden aus diesem Grunde durchgehend eine gemeinsame Ebene aus bzw. befinden sich aus diesem Grunde durchgehend auf identischem vertikalen Höhenniveau. Aus der Position nach Fig. 3 wurde der dem ersten Modul 10 zugeordnete Schubbalken 15 in die Position nach Fig. 4 weiter entlang der Bewegungsbahn 13 verfahren.

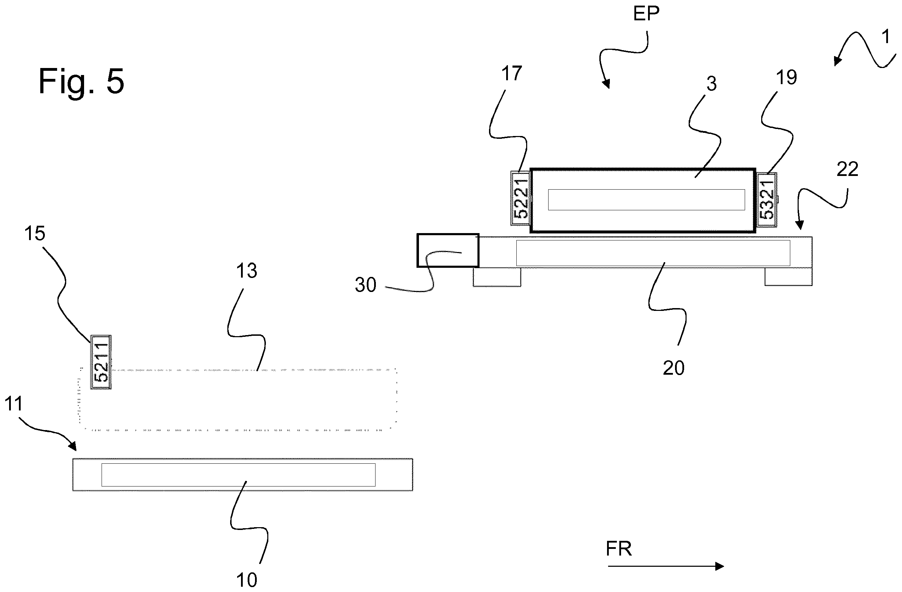

Aus der Position nach Fig. 4 wurde das erste Modul 10 weiter in vertikaler Richtung in die Position nach Fig. 5 abgesenkt und hat in Fig. 5 eine Position erreicht, bei welcher eine weitere bzw. eine neue Artikellage auf die erste Auflageebene 11 geschoben werden kann. Um die sodann auf der ersten Auflageebene 11 angeordnete weitere bzw. neue Artikellage auf die Horizontalfördereinrichtung 30 zu schieben, tritt der Schubbalken 15 mit in Förderrichtung FR zuhinterst angeordneten Artikeln der weiteren bzw. neuen Artikellage in Oberflächenkontakt.

Über den Schubbalken 17, welcher dem zweiten Modul 20 zugeordnet ist, wurde die auf der zweiten Auflageebene 22 angeordnete Artikellage 3 gegen den Anlagebalken 19 geschoben, welcher in Fig. 5 in seiner Position ruht bzw. nicht bewegt wird. Die Artikellage 3 hat hierbei eine Entladeposition eingenommen, aus welcher die Artikellage 3 mittels des zweiten Moduls 20 auf einer Palette abgesetzt werden kann. Das zweite Modul 20 öffnet hierzu eine Klappe und/oder Jalousie und gibt die Artikellage 3 in Richtung nach unten frei bzw. setzt die Artikellage 3 in Richtung nach unten auf der zugeordneten Palette ab. Hierauf wird das zweite Modul 20 in vertikaler Richtung angehoben, um auf der Artikellage 3, welche sich sodann auf der Palette befindet, eine weitere Artikellage 3 abzusetzen.

Da zum Überführen einer Artikellage 3 von der ersten Auflageebene 11 an die zweite Auflageebene 22 eine Horizontalfördereinrichtung 30 vorgesehen ist, ist es nicht notwendig, die jeweilige Artikellage 3 mittels eines Schubbalkens 15 bzw. 17 von der ersten Auflageebene 11 auf die zweite Auflageebene 22 zu bewegen. Die umlaufende Bewegung des Schubbalkens 15 ist somit derart, dass der Schubbalken 15 während einer jeweiligen umlaufenden Bewegung zu keinem Zeitpunkt in horizontaler Richtung über die erste Auflageebene 11 hinausragt. Hierdurch können das erste Modul 10 und das zweite Modul 20 zu einem frühen Zeitpunkt bzw. unmittelbar nach Übertritt eines letzten Artikels einer jeweiligen Artikellage 3 auf die Horizontalfördereinrichtung 30 relativ zueinander in vertikaler Richtung bewegt werden. Unter Zuhilfenahme der Vorrichtung 1 bzw. der einzelnen sich aus einer Zusammenschau der Figuren 1 bis 5 ergebenden Schritte kann somit eine Palettierung von Artikellagen 3 mit hohem Durchsatz erfolgen.

Die Fig. 6 zeigt im Flussdiagramm einzelne Schritte, wie sie bei diversen Ausführungsformen des erfindungsgemäßen Verfahrens 100 vorgesehen sein können. In einem ersten Schritt 110 werden ein erstes Modul 10 (vgl. Figuren 1 bis 5) und ein zweites Modul 20 relativ zueinander bewegt und nehmen hierauf folgend eine Übergabeposition ein, in welcher eine bereits auf einer ersten Auflageebene 11 des ersten Moduls 10 angeordnete Artikellage 3 an eine Auflageebene 22 des zweiten Moduls 20 übergeben werden kann.

Im Schritt 120 werden bis dahin noch auf der ersten Auflageeben 11 angeordnete Artikel der jeweiligen Artikellage 3 von der ersten Auflageebene 11 über eine Horizontalfördereinrichtung 30 auf die zweite Auflageebene 22 des zweiten Moduls 20 geschoben. Die Horizontalfördereinrichtung 30 befindet sich hierbei in einer Förderrichtung FR bzw. Bewegungsrichtung der Artikel zwischen der ersten Auflageebene 11 und der zweiten Auflageebene 22.

Im Schritt 130 wird die auf die zweite Auflageebene 22 mittels der Horizontalfördereinrichtung 30 überführte Artikellage 3 in eine durch die zweite Auflageebene 22 ausgebildete Entladeposition EP gebracht und im Schritt 140 sodann über das zweite Modul 20 aus der Entladeposition EP auf einer zugeordneten Palette abgesetzt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 3: Artikellage
- 10: erstes Modul
- 11: erste Auflageebene
- 13: Bewegungsbahn
- 15: Schubbalken (erstes Modul 10)
- 17: Schubbalken (zweites Modul 20)
- 19: Anlagebalken
- 20: zweites Modul
- 22: zweite Auflageebene
- 30: Horizontalfördereinrichtung
- 100: Verfahren
- 110: erster Verfahrensschritt
- 120: zweiter Verfahrensschritt
- 130: dritter Verfahrensschritt
- 140: vierter Verfahrensschritt

- EP: Entladeposition
- FR: Förderrichtung
- TE: Transportebene

## Patentansprüche

1. Verfahren (100) zum Verbringen einer Artikelgruppe und/oder Artikellage (3) von einer ersten Auflageebene (11) eines ersten Moduls (10) auf eine zweite Auflageebene (22) eines zweiten Moduls (20), welches zweite Modul (20) dem ersten Modul (10) in einer Förderrichtung (FR) der Artikelgruppe und/oder Artikellage (3) nachgeordnet ist und bei welchem Verfahren (100)
- das erste Modul (10) und das zweite Modul (20) für ein hierauf zeitlich folgendes Überführen einer Artikelgruppe und/oder Artikellage (3) von der ersten Auflageebene (11) auf die zweite Auflageebene (22) in vertikaler Richtung relativ zueinander bewegt werden, wobei
- wenigstens eine der ersten Auflageebene (11) des ersten Moduls (10) sowie der zweiten Auflageebene (22) des zweiten Moduls (20) in Förderrichtung (FR) zwischengeordnete Horizontalfördereinrichtung (30) vorgesehen ist, welche wenigstens eine Horizontalfördereinrichtung (30) Artikel einer jeweiligen Artikelgruppe und/oder Artikellage (3) zum Überführen von der ersten Auflageebene (11) des ersten Moduls (10) an die zweite Auflageebene (22) des zweiten Moduls (20) in Richtung der zweiten Auflageebene (22) transportiert, **dadurch gekennzeichnet, dass** vorgesehen ist, dass
- mindestens ein vorzugsweise umlaufend geführter und dem ersten Modul (10) zugeordneter Schubbalken (15) mit wenigstens einem in Förderrichtung (FR) zuletzt angeordneten Artikel einer jeweiligen Artikelgruppe und/oder Artikellage (3) in Oberflächenkontakt tritt und den jeweiligen wenigstens einen in Förderrichtung (FR) zuletzt angeordneten Artikel einer jeweiligen Artikelgruppe und/oder Artikellage (3) von der ersten Auflageebene (11) des ersten Moduls (10) auf die wenigstens eine Horizontalfördereinrichtung (30) schiebt, wobei
- der mindestens eine vorzugsweise umlaufend geführte und dem ersten Modul (10) zugeordnete Schubbalken (15) während des Schiebens des wenigstens einen in Förderrichtung (FR) zuletzt angeordneten Artikels einer jeweiligen Artikelgruppe und/oder Artikellage (3) von der ersten Auflageebene (11) des ersten Moduls (10) auf die wenigstens eine Horizontalfördereinrichtung (30) zu keinem Zeitpunkt in horizontaler Richtung über die erste Auflageebene (11) hinausragt
- und wobei eine Speicherkapazität der wenigstens einen Horizontalfördereinrichtung (30) derart ausgebildet ist, dass die wenigstens eine Horizontalfördereinrichtung (30) eine Artikelgruppe und/oder Artikellage (3) lediglich anteilig aufnehmen kann.

2. Verfahren nach Anspruch 1, bei welchem die der ersten Auflageebene (11) und der zweiten Auflageebene (22) in Förderrichtung (FR) zwischengeordnete Horizontalfördereinrichtung (30) mechanisch fest mit dem zweiten Modul (20) in Verbindung steht, wobei die der ersten Auflageebene (11) und der zweiten Auflageebene (22) in Förderrichtung (FR) zwischengeordnete Horizontalfördereinrichtung (30) bei einer vertikalen Bewegung des zweiten Moduls (20) über die mechanische Verbindung mit dem zweiten Modul (20) in vertikaler Richtung mitbewegt wird.

3. Verfahren nach Anspruch 1 oder Anspruch 2, bei welchem sich Artikel einer jeweiligen Artikelgruppe und/oder Artikellage (3) zeitlich während einer bestimmten Phase des Verbringens von der ersten Auflageebene (11) auf die zweite Auflageebene (22) zumindest anteilig noch auf der wenigstens einen Horizontalfördereinrichtung (30) befinden, wobei das erste Modul (10) während dieser bestimmten Phase in vertikaler Richtung und relativ zu der wenigstens einen Horizontalfördereinrichtung (30) bewegt wird.

4. Verfahren nach einem der Ansprüche 1 bis 3, bei welchem die erste Auflageebene (11) und eine durch die wenigstens eine Horizontalfördereinrichtung (30) ausgebildete Transportebene (TE) eine gemeinsame Ebene ausbilden und die gemeinsame Ebene mindestens beibehalten, bis ein in Förderrichtung (FR) zuletzt angeordneter Artikel einer jeweiligen Artikelgruppe und/oder Artikellage (3) von der ersten Auflageebene (11) auf die wenigstens eine Horizontalfördereinrichtung (30) vollständig übergetreten ist.

5. Verfahren nach einem der Ansprüche 1 bis 4, bei welchem zeitlich während und/oder zeitlich nach einem Übertritt einer jeweilige Artikelgruppe und/oder Artikellage (3) von der wenigstens einen Horizontalfördereinrichtung (30) auf die zweite Auflageebene (22) ein Anlagebalken (19) mindestens einen jeweiligen in Förderrichtung (FR) zuvorderst angeordneten Artikel einer jeweiligen Artikelgruppe und/oder Artikellage (3) mit geringem Abstand oder unter Oberflächenkontakt begleitet.

6. Verfahren nach einem der Ansprüche 1 bis 5, bei welchem mindestens ein vorzugsweise umlaufend geführter und dem zweiten Modul (20) zugeordneter Schubbalken (17) wenigstens einen auf die zweite Auflageebene (22) des zweiten Moduls (20) übergetretenen und in Förderrichtung (FR) zuletzt angeordneten Artikel einer jeweiligen Artikelgruppe und/oder Artikellage (3) in eine durch die zweite Auflageebene (22) ausgebildete Entladeposition (EP) schiebt.

7. Verfahren nach einem der Ansprüche 1 bis 6, bei welchem die wenigstens eine Horizontalfördereinrichtung (30) mindestens ein drehend, rotierend und/oder umlaufend angetriebenes Fördermittel umfasst, auf welchem Artikel einer jeweiligen Artikelgruppe und/oder Artikellage (3) aufstehen und über welches Artikel einer jeweiligen Artikelgruppe und/oder Artikellage (3) in Richtung der zweiten Auflageebene (22) transportiert werden.

## Claims

1. A method (100) for moving an article group and/or article layer (3) from a first support surface (11) of a first module (10) onto a second support surface (22) of a second module (20), which second module (20) is arranged downstream from the first module (10) in a conveying direction (FR) of the article group and/or article layer (3), and in which method (100)
- the first module (10) and the second module (20) are moved in vertical direction relative to each other for the purpose of a temporally subsequent transfer of an article group and/or article layer (3) from the first support surface (11) onto the second support surface (22), wherein
- at least one horizontal conveyor (30) is provided arranged intermediately in conveying direction (FR) between the first support surface (11) of the first module (10) and the second support surface (22) of the 22 second module (20), which at least one horizontal conveyor (30) transports articles of a particular article group and/or article layer (3) toward the second support surface (22) for the purpose of the transfer of the article group and/or article layer (3) from the first support surface (11) of the first module (10) to the second support surface (22) of the second module (20), **characterised in that** it is provided that
- at least one preferably circulatingly guided pushing bar (15) assigned to the first module (10) comes into surface contact with at least one article arranged hindmost in conveying direction (FR) in a particular article group and/or article layer (3), and pushes the particular at least one article arranged hindmost in conveying direction (FR) in a particular article group and/or article layer (3) from the first support surface (11) of the first module (10) onto the at least one horizontal conveyor (30), wherein
- the at least one preferably circulatingly guided pushing bar (15) assigned to the first module (10) at no point in time projects in horizontal direction beyond the first support surface (11) while pushing the at least one article arranged hindmost in conveying direction (FR) in a particular article group and/or article layer (3) from the first support surface (11) of the first module (10) onto the at least one horizontal conveyor (30),
- and wherein a storage capacity of the at least one horizontal conveyor (30) is designed such that the at least one horizontal conveyor (30) can only partially accommodate an article group and/or article layer (3).

2. The method according to claim 1, in which the horizontal conveyor (30) arranged intermediately in conveying direction (FR) between the first support surface (11) and the second support surface (22) is mechanically fixedly connected to the second module (20), wherein the horizontal conveyor (30) arranged intermediately in conveying direction (FR) between the first support surface (11) and the second support surface (22) is moved along in vertical direction together with the second module (20) via the mechanical connection in a vertical movement of the second module (20).

3. The method according to claim 1 or claim 2, in which articles of a particular article group and/or article layer (3) are at least partially still situated on the at least one horizontal conveyor (30) temporally during a specific phase of their being moved from the first support surface (11) onto the second support surface (22), wherein the first module (10) is moved in vertical direction and relative to the at least one horizontal conveyor (30) during this specific phase.

4. The method according to one of the claims 1 to 3, in which the first support surface (11) and a transport surface (TE), which is formed by the at least one horizontal conveyor (30), form a common surface and maintain the common surface at least until an article arranged hindmost in conveying direction (FR) in a particular article group and/or article layer (3) has completely passed over from the first support surface (11) onto the at least one horizontal conveyor (30).

5. The method according to one of the claims 1 to 4, in which, temporally during and/or temporally after a passing over of a particular article group and/or article layer (3) from the at least one horizontal conveyor (30) onto the second support surface (22), a contact bar (19) accompanies at least one particular article arranged foremost in conveying direction (FR) in a particular article group and/or article layer (3) at a small distance from or in surface contact with the article.

6. The method according to one of the claims 1 to 5, in which at least one preferably circulatingly guided pushing bar (17) assigned to the second module (20) pushes at least one article arranged hindmost in conveying direction (FR) in a particular article group and/or article layer (3), which article has passed over onto the second support surface (22) of the second module (20), into an unloading position (EP) formed by the second support surface (22).

7. The method according to one of the claims 1 to 6, in which the at least one horizontal conveyor (30) comprises at least one rotatingly and/or circulatingly driven conveying means, on which articles of a particular article group and/or article layer (3) stand and via which articles of a particular article group and/or article layer (3) are transported toward the second support surface (22).

## Revendications

1. Procédé (100) destiné à transférer un groupe d'articles et/ou une couche d'articles (3) d'un premier plan d'appui (11) d'un premier module (10) à un deuxième plan d'appui (22) d'un deuxième module (20), lequel deuxième module (20) est situé en aval du premier module (10) dans une direction de transport (FR) du groupe d'articles et/ou de la couche d'articles (3), et dans lequel procédé (100)
- le premier module (10) et le deuxième module (20) sont déplacés l'un par rapport à l'autre dans la direction verticale pour transférer ensuite un groupe d'articles et/ou une couche d'articles (3) du premier plan d'appui (11) au deuxième plan d'appui (22), dans lequel
- il est prévu au moins un dispositif de transport horizontal (30) intercalé dans la direction de transport (FR) entre le premier plan d'appui (11) du premier module (10) et le deuxième plan d'appui (22) du deuxième module (20), lequel au moins un dispositif de transport horizontal (30) transporte des articles d'un groupe d'articles respectif et/ou d'une couche d'articles respective (3) en direction du deuxième plan d'appui (22) pour les transférer du premier plan d'appui (11) du premier module (10) au deuxième plan d'appui (22) du deuxième module (20), **caractérisé par le fait qu'**il est prévu que
- au moins une barre de poussée (15) qui est menée de préférence en circulation et est associée au premier module (10) vient en contact superficiel avec au moins un article d'un groupe d'articles respectif et/ou d'une couche d'articles respective (3), qui est disposé en dernier dans la direction de transport (FR), et pousse ledit au moins un article respectif d'un groupe d'articles respectif et/ou d'une couche d'articles respective (3), qui est disposé en dernier dans la direction de transport (FR), depuis le premier plan d'appui (11) du premier module (10) sur ledit au moins un dispositif de transport horizontal (30), dans lequel
- pendant ledit au moins un article d'un groupe d'articles respectif et/ou d'une couche d'articles respective (3), qui est disposé en dernier dans la direction de transport (FR) est poussé depuis le premier plan d'appui (11) du premier module (10) sur ledit au moins un dispositif de transport horizontal (30), ladite au moins une barre de poussée (15) menée de préférence en circulation et associée au premier module (10) ne fait saillie à aucun moment du premier plan d'appui (11) dans la direction horizontale
- et dans lequel une capacité de stockage dudit au moins un dispositif de transport horizontal (30) est conçue de telle sorte que ledit au moins un dispositif de transport horizontal (30) ne peut recevoir que partiellement un groupe d'articles et/ou une couche d'articles (3).

2. Procédé selon la revendication 1, dans lequel le dispositif de transport horizontal (30) intercalé dans la direction de transport (FR) entre le premier plan d'appui (11) et le deuxième plan d'appui (22) est relié de manière mécaniquement solide au deuxième module (20), dans lequel, lorsque le deuxième module (20) est déplacé verticalement, le dispositif de transport horizontal (30) intercalé dans la direction de transport (FR) entre le premier plan d'appui (11) et le deuxième plan d'appui (22) est déplacé, grâce à la liaison mécanique, conjointement avec le deuxième module (20) dans la direction verticale.

3. Procédé selon la revendication 1 ou la revendication 2, dans lequel des articles d'un groupe d'articles respectif et/ou d'une couche d'articles respective (3) se trouvent encore, au moins partiellement, sur ledit au moins un dispositif de transport horizontal (30) pendant une certaine phase de transfert depuis le premier plan d'appui (11) sur le deuxième plan d'appui (22), dans lequel le premier module (10) est déplacé, pendant cette certaine phase, dans la direction verticale et par rapport audit au moins un dispositif de transport horizontal (30).

4. Procédé selon l'une quelconque des revendications 1 à 3, dans lequel le premier plan d'appui (11) et un plan de transport (TE) formé par ledit au moins un dispositif de transport horizontal (30) forment un plan commun et maintiennent au moins le plan commun jusqu'à ce qu'un article d'un groupe d'articles respectif et/ou d'une couche d'articles respective (3), qui est disposé en dernier dans la direction de transport (FR), soit complètement passé du premier plan d'appui (11) sur ledit au moins un dispositif de transport horizontal (30).

5. Procédé selon l'une quelconque des revendications 1 à 4, dans lequel, pendant et/ou après un passage d'un groupe d'articles respectif et/ou d'une couche d'articles respective (3) dudit au moins un dispositif de transport horizontal (30) au deuxième plan d'appui (22), une poutre d'appui (19) accompagne, à une faible distance ou en étant en contact superficiel avec celui-ci, au moins un article d'un groupe d'articles respectif et/ou d'une couche d'articles respective (3), qui est disposé en premier dans la direction de transport (FR).

6. Procédé selon l'une quelconque des revendications 1 à 5, dans lequel au moins une barre de poussée (17) qui est menée de préférence en circulation et est associée au deuxième module (20) pousse au moins un article d'un groupe d'articles respectif et/ou d'une couche d'articles respective (3), qui est passé au deuxième plan d'appui (22) du deuxième module (20) et est disposé en dernier dans la direction de transport (FR), dans une position de déchargement (EP) formée par le deuxième plan d'appui (22).

7. Procédé selon l'une quelconque des revendications 1 à 6, dans lequel ledit au moins un dispositif de transport horizontal (30) comprend au moins un moyen de transport qui est entrainé en rotation, de manière rotative et/ou en circulation et sur lequel se trouvent des articles d'un groupe d'articles respectif et/ou d'une couche d'articles respective (3) et par le biais duquel des articles d'un groupe d'articles respectif et/ou d'une couche d'articles respective (3) sont transportés en direction du deuxième plan d'appui (22).
